# EUROPÄISCHE PATENTSCHRIFT

(11) **EP 0 635 297 B1**
(45) Veröffentlichungstag und Bekanntmachung des Hinweises auf die Patenterteilung: **29.08.2001**
(21) Anmeldenummer: 94108796.7
(22) Anmeldetag: 08.06.1994
(51) Int. Cl.: B01D 39/18, B01D 39/08, B01D 39/16, A47L 9/14

(54) **Mehrlagiger Filterverbund zur Herstellung von Staubsaugerfilterbeuteln**
Multi-layer composite filter for the production of vacuum cleaner bags
Filtre composé à plusieurs couches pour la production de sacs filtrants pour aspirateur à poussières

(30) Priorität: 21.07.1993 US 95751
(43) Veröffentlichungstag der Anmeldung: 25.01.1995
(73) Patentinhaber: FiberMark Gessner GmbH & Co., 83052 Bruckmühl (DE)
(72) Erfinder: Raabe, Ernst, D-83064 Raubling-Nicklheim (DE); Klimmek, Albrecht, D-83052 Bruckmühl (DE)
(74) Vertreter: Kindler, Matthias, Dr. Dipl.-Chem.

(56) Entgegenhaltungen:
- EP-A- 0 338 479
- US-A- 3 559 381
- US-A- 3 859 064

## Beschreibung

Die Erfindung betrifft einen mehrlagigen Filterverbund zur Herstellung von Staubsaugerfilterbeuteln, umfassend mindestens eine Lage Filterpapier und mindestens eine Lage Feinfaser-Vlies.

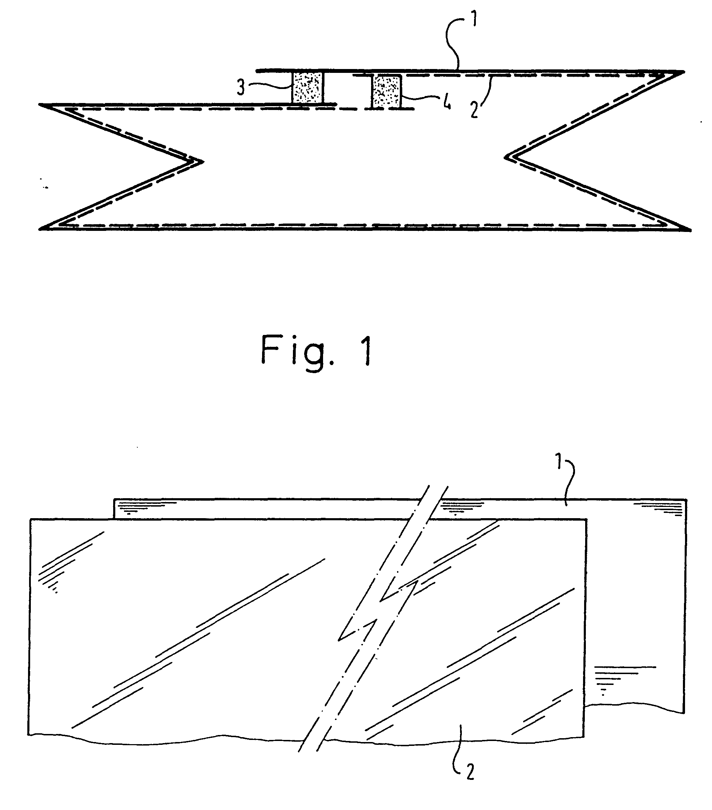

Zur Verbesserung der filtertechnischen Eigenschaften werden heute zum großen Teil bereits doppelwandige Filterbeutel hergestellt, bestehend aus einer Filterpapieraußenlage und einem hoch porösen Innenlagenvlies. Bei diesem Innenlagenvlies handelt es sich meistens um eine Zellstoffversion, die in bestimmten Fällen auch mit Synthesefasern abgemischt sein kann. Eine besondere Ausführung der doppelwandigen Staubsaugerfilterbeutel enthält eine Filterpapieraußenlage und ein Meltblown-Feinfaservlies als Innenlage, um ganz besonders hohe Werte der Filtereffizienz zu erzielen (DE-38 12 849 C2, EP-0 338 479 Bl). Dabei werden in der Beutelproduktion der Beutelmaschine Papier und Meltblown-Vlies in separaten Rollen vorgelegt. Papier (1) und Vlies (2) werden randkantenversetzt in die Beutelmaschine eingezogen, um - wie in Fig. 1 dargestellt - eine Papier-zu-Papier-Verklebung (3) und eine Vlies-zu-Vlies-Verklebung (4) im Längsnahtbereich zu gewährleisten. Würde ohne diesen Kantenversatz gearbeitet, käme zwischen die zu verklebenden Papierlagen eine Meltblown-Schicht zu liegen, die - da aus Kunststoff bestehend - als Trennschicht funktionieren würde und eine ausreichende Längsnahtverklebung erheblich erschweren, wenn nicht sogar verhindern würde. Meltblown-Vliese können grundsätzlich aus thermoplastischen Kunststoffen hergestellt werden, vorzugsweise aus Polyolefinen, Polyamiden, Polyester, Polycarbonat und Copolymeren davon. Meltblown-Vliese zeichnen sich bei entsprechender Faserfeinheit zwischen 2 und 10 µm Durchmesser als hervorragende Filtermaterialien aus, weisen jedoch nur begrenzte mechanische Eigenschaften auf. Aufgrund der geringen Festigkeitswerte sind dem Meltblown-Vlies, das bei der Verarbeitung von einer separaten Rolle in die Beutelmaschine eingezogen wird, bzgl. des Flächengewichts nach unten Grenzen gesetzt. So kommen bei bekannten Ausführungen üblicherweise Flächengewichte von 15-35 g/m² zur Anwendung. Bei Unterschreitung des Flächengewichts von 15 g/m² kann zwar bei der Konstruktion des Meltblown-Vlieses Einfluß auf die Festigkeitsausbildung (Berstdruck, Bruchwiderstand) ausgeübt werden, dabei leidet jedoch die Porosität des Materials sehr stark, so daß ein Einsatz als Filtermaterial ausscheidet. Aus diesem Grunde stellen die heute für diese Anwendung zum Einsatz kommenden Meltblown-Vliese einen Kompromiß aus sich konträr gegenüberstehenden Produktmerkmalen, nämlich filtertechnische und mechanische Eigenschaften, dar, sodaß ein Optimum an filtertechnischen Eigenschaften nur schwer erreichbar ist.

Wird dieses Meltblown-Material jedoch vor der Verarbeitung auf den bekannten Beutelmaschinen als Verbund mit der vorgesehenen Filterpapieraußenlage kombiniert, werden an die mechanischen Eigenschaften des Meltblown-Vlieses keine Anforderungen mehr gestellt, da diese von dem Filterpapier übernommen werden. Die Konstruktion des Meltblown-Vlieses kann aus diesem Grunde voll auf die Ausrichtung der filtertechnischen Eigenschaften gerichtet werden, so daß hier auch hochporöse, offen strukturierte Filtervliese zur Anwendung kommen können. Der flächenbezogenen Masse sind nach unten lediglich Grenzen durch die vorgegebene Filtereffizienz und die Speicherfähigkeit des Materials gesetzt; die Materialfestigkeit in Form des Berstdrucks oder des Bruchwiderstands spielt in dieser Form bei der Verarbeitung keine Rolle. Es sind deshalb Bereiche der flächenbezogenen Masse von weit unter 10 g/m² möglich.

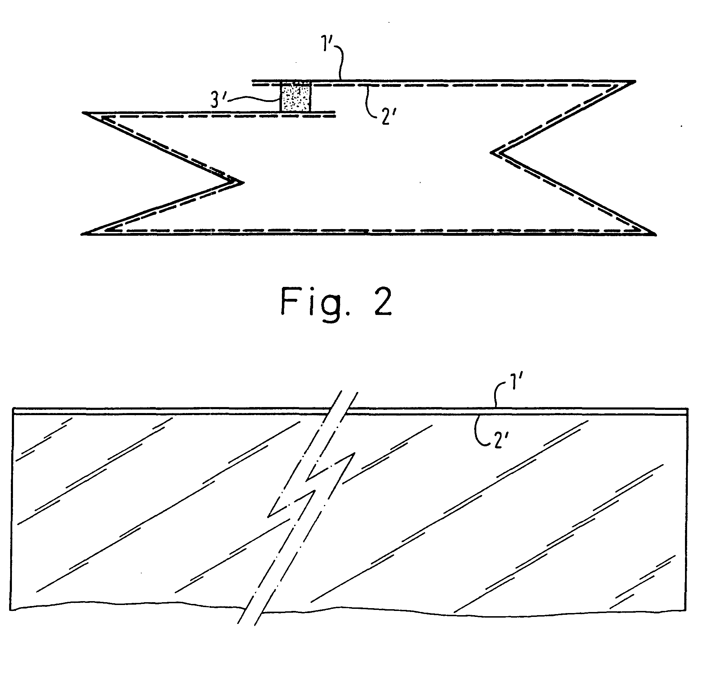

Diese Ausführungen weisen jedoch bei vollflächiger Belegung des Papiers durch die aufgebrachte Meltblown-Schicht in der Beutelherstellung den Nachteil auf, daß bei der Beutellängsnahtverklebung (3') zwischen den zu verklebenden Papierlagen (1'), die ja fest miteinander verbunden werden müssen, nun eine Meltblown-Schicht (2') zu liegen kommt (siehe Fig. 2). Durch diese zwischen den Papierlagen (1') eingebaute Meltblown-Schicht (2') ist eine ausreichend feste Längsnahtverklebung (3') mit herkömmlichen Klebertypen nicht möglich. Auch durch Verwendung anderer in dieser Branche unüblicher Klebetechnologien ist die einwandfreie Haftung der Papierlagen (l') zueinander nur bedingt erreichbar.

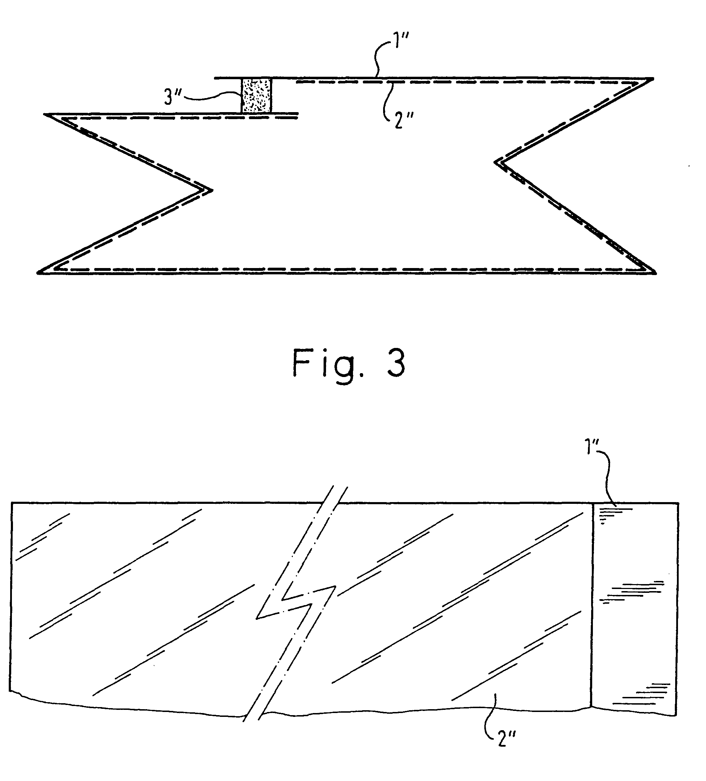

Erfindungsgemäß wird dieses Problem durch einen mehrlagigen Filterverbund gelöst, der mindestens eine Lage Filterpapier und mindestens eine Lage Feinfaser-Vlies umfaßt, wobei die mindestens eine Lage Feinfaser-Vlies nicht die volle Breite einer mit ihr verbundenen Lage Filterpapier abdeckt und nicht über die Ränder der Filterpapierlage hinaussteht, sodaß ein oder zwei Randstreifenaussparungen auf mindestens einer Lage Filterpapier gebildet sind. Dadurch wird erreicht, wie in Fig. 3 dargestellt, daß bei der Schlauchbildung in der Beutelmaschine Papier (1") auf Papier (1") zu liegen kommt und über eine Längsnahtverklebung (3") verleimt werden kann, ohne daß eine Lage Feinfaser-Vlies (2") in den Verleimungsbereich eingreift.

Der Rand der Lage Feinfaser-Vlies auf der Randstreifenaussparungsseite kann entweder in Schnittkantenausführung ausgelegt sein, er kann aber auch als auslaufender Rand, so wie er z.B. bei direkter Erzeugung und Ablage des Feinfaser-Vlieses auf die Lage Filterpapier entsteht, im Verbund verwendet werden. In jedem Fall muß sichergestellt sein, daß die Filamente des Feinfaser-Vlieses im Bereich der Längsnahtverklebung bei der Beutelherstellung nicht zwischen die Papierlagen zu liegen kommen und sich dort als Trennschicht bemerkbar machen. Dadurch ist die Verwendung der üblichen Leimsorten möglich, und gleichzeitig die einwandfreie Ausbildung der Klebenaht gesichert.

In dem Fall, daß das Futtervlies in Feinfaser-Ausführung als Verbund mit dem Papier von einer Rolle kommend der Beutelmaschine vorgelegt wird, können die Produktionsbedingungen an den mechanischen Verarbeitungseigenschaften des Papiers ausgerichtet werden, so daß hier wesentlich höhere Produktivitäten erzielbar sind als bei einer separaten Einführung des Feinfaser-Vlieses und des Papiers von separaten Rollen. Darüberhinaus entfällt die zusätzliche Leimaufbringung auf das Feinfaser-Vlies zur Schlauchausbildung.

Aus verarbeitungstechnischen Gründen ist der erfindungsgemäße Filterverbund vorzugsweise bahnförmig ausgestaltet.

Die Randstreifenaussparung kann je nach Anforderung 5-50 mm betragen, abhängig von der entsprechenden Beutelkonstruktion, von der eingesetzten Beutelmaschine und den dabei verwendeten Verleimungstechnologien. Durch die variable Gestaltung der Breite der Randaussparung kann sichergestellt werden, daß der Futtervliesrand exakt positioniert an den Längsnahtklebebereich angesetzt wird. Damit ist gewährleistet, daß im Beutel trotz der Randstreifenaussparung eine vollflächige, doppelwandige Filtration stattfindet. Bei einer speziellen Ausführungsform ist nur eine Randstreifenaussparung auf mindestens einer Lage Filterpapier vorgesehen, die je nach Verarbeitungsanforderung der Beutelmaschine auf der linken oder rechten Bahnseite in Verarbeitungsrichtung angebracht ist.

Der Verbund zwischen der mindestens einen Lage Filterpapier und der mindestens einen Lage Feinfaser-Vlies muß so gewählt sein, daß zum einen eine ausreichende Haftung der Lagen zueinander gegeben ist, um ein Delaminieren während des Verarbeitungsprozesses zu verhindern. Andererseits darf durch die gewählte Verbindungstechnologie die freie Filterfläche nur in ganz begrenztem Umfang beeinträchtigt werden. Es ist deshalb erforderlich, die Haftvermittlung zwischen den Lagen so zu wählen, daß nur ein geringer partieller Porenverschluß eintritt und damit der erforderliche Luftstrom durch den Staubsaugerbeutel fließen kann. Gemäß einer bevorzugten Ausführungsform des erfindungsgemäßen Filterverbundes sind zwei oder mehrere Lagen durch Haftvermittler miteinander verklebt, wobei als Haftvermittler insbesondere Dispersionsleime, Heißschmelzkleber und Kleber in Pulverform in Frage kommen. Eine weitere Möglichkeit der Lagenverbindung besteht in der Anwendung des Ultraschall-Schweißverfahrens sowie des Thermokalandrierens. Sowohl bei der Verwendung von Klebertypen wie auch beim Ultraschall-Schweißen und Thermokalandrieren ist darauf zu achten, daß die Bindepunkte zwischen den Lagen in ihrer Form und Häufigkeit in regelmäßigem oder unregelmäßigem Design so angebracht sind, daß über die Fläche eine gleichmäßige Lagenverbindung gegeben ist, und die Strömungsverhältnisse für die Luft als Staubtransporteur nicht gestört werden. Die Lagen sind hierbei vorzugsweise punkt-, raster- oder streifenförmig miteinander verbunden.

In einer besonderen Ausführung können die beiden Stirnränder der mindestens einen Lage Feinfaser-Vlies in Form einer durchgehenden Linie bzw. einem Streifen leckdicht gegen Luft mit der darunterliegenden Lage (z.B. Filterpapierlage) verbunden werden. Dies kann bei solchen Beuteltypen von Vorteil sein, bei denen besondere Turbolenzen aufgrund der Geräteleistung und der Luftführung im Beutel zu erwarten sind, und eine Falschluftströmung zwischen einzelnen Lagen, insbesonders zwischen Filterpapier- und Feinfaser-Vlieslagen, die über die Randzonen eintreten könnte, verhindert werden muß.

Zur Herstellung des beschriebenen Verbunds können alle bekannten Filterpapiere zur Fertigung von Staubsaugerbeuteln verwendet werden. Die flächenbezogene Masse beträgt dabei vorzugsweise 30-80 g/m² (ISO 536) , die Luftdurchlässigkeit vorzugsweise 80-600 l/m².s bei 200 Pa Unterdruck (DIN 53887). Da das Filterpapier für das Verbundmaterial die mechanischen Anforderungen zu übernehmen hat, betragen die Werte der Bruchlast längs vorzugsweise zwischen 20 und 80 N (15 mm Streifenbreite) und quer vorzugsweise zwischen 15 und 60 N (15 mm Streifenbreite (DIN 53112)). Der Berstdurck des Filterpapiers liegt bei jeweils 15 mm Streifenbreite bevorzugt im Bereich zwischen 80 kPa und 300 kPa (DIN 53141). Die flächenbezogene Masse des Feinfaser-Vlieses beträgt vorzugsweise 3-30 g/m² (ISO 536), wobei der Bereich von 10-15 g/m² insbesondere bevorzugt ist. Die Luftdurchlässigkeit des Feinfaser-Vlieses liegt vorzugsweise in einem Bereich von 100-2.000 l/m².s bei 200 Pa Unterdruck (DIN 53887), insbesondere bevorzugt zwischen 500 und 1.000 l/m².s bei 200 Pa Unterdruck. Bevorzugte Durchmesser der Fasern des Feinfaser-Vlieses liegen bei 0,5 µm bis 15 µm, wobei 2 µm bis 8 µm besonders vorteilhaft sind (Bestimmungsmethode: mikroskopisch). In einer besonders günstigen Ausführungsform besteht das Feinfaser-Vlies aus Meltblown-Vlies.

Der erfindungsgemäße Filterverbund besitzt vorzugsweise eine Luftdurchlässigkeit von 45 is 460 l/m².s bei 200 Pa Unterdruck (DIN 53887).

Eine spezielle Ausführungsform des Filterverbunds besteht aus einer Lage Feinfaser-Vlies und einer Lage Filterpapier.

Zur Herstellung des erfindungsgemäßen Verbundes mit Randstreifenaussparung kann die mindestens eine Lage Feinfaser-Vlies direkt auf einer vorgelegten Filterpapierlage mit der notwendigen Randaussparung erzeugt und dort abgelegt werden. Das Teilen der Bahn und Zuschneiden auf die endgültig erforderliche Breite wird in diesem Fall in einem anschließenden Arbeitsgang durchgeführt.

Der Filterverbund kann aber auch durch vorheriges Anfertigen der mindestens einen Lage Feinfaser-Vlies in der erforderlichen Breite, anschließendem Positionieren dieser Lage auf einer Lage Filterpapier zur Erzeugung der Randstreifenaussparung und Laminieren erzeugt werden. Die Randstreifenaussparungen, die je nach Breitenanforderung für die herzustellenden Beuteltypen in einer entsprechenden Anzahl über die gesamte Arbeitsbreite des Verbundes vor dem Rollenschneiden anzufertigen sind, können durch streifenförmigen Beschnitt der mindestens einen Lage Feinfaser-Vlies erzeugt werden.

## Patentansprüche

1. Mehrlagiger Filterverbund zur Herstellung von Staubsaugerfilterbeuteln, umfassend mindestens eine Lage Filterpapier und mindestens eine Lage Feinfaservlies, **dadurch gekennzeichnet,** daß die mindestens eine Lage Feinfaservlies nicht die volle Breite der mit ihr verbundenen Lage Filterpapier abdeckt und nicht über die Ränder der Filterpapierlage hinaussteht, und somit eine oder zwei Randstreifenaussparungen auf der mindestens einen Lage Filterpapier gebildet sind.

2. Mehrlagiger Filterverbund nach Anspruch 1, **dadurch gekennzeichnet,** daß er aus einer Lage Filterpapier und einer Lage Feinfaser-Vlies besteht.

3. Mehrlagiger Filterverbund nach Anspruch 1 oder 2, **dadurch gekennzeichnet,** daß die Luftdurchlässigkeit des Verbundes 45 bis 460 l/m².s bei 200 Pa Unterdruck (DIN 53887) beträgt.

4. Mehrlagiger Filterverbund nach einem der Ansprüche 1 bis 3, **dadurch gekennzeichnet,** daß die flächenbezogene Masse der mindestens einen Lage Filterpapier 30 bis 80 g/m² (ISO 536) beträgt.

5. Mehrlagiger Filterverbund nach einem der Ansprüche 1 bis 4, **dadurch gekennzeichnet,** daß die Luftdurchlässigkeit der mindestens einen Lage Filterpapier 80 bis 600 l/m².s bei 200 Pa Unterdruck (DIN 53887) beträgt.

6. Mehrlagiger Filterverbund nach einem der Ansprüche 1 bis 5, **dadurch gekennzeichnet,** daß der Bruchwiderstand der mindestens einen Lage Filterpapier längs 20 bis 80 N/15 mm Streifenbreite und quer 15 bis 60 N/15 mm Streifenbreite (DIN 53112) beträgt.

7. Mehrlagiger Filterverbund nach einem der Ansprüche 1 bis 6, **dadurch gekennzeichnet,** daß die mindestens eine Lage Feinfaser-Vlies eine flächenbezogene Masse von 3 bis 30 g/m² (ISO 536) aufweist.

8. Mehrlagiger Filterverbund nach einem der Ansprüche 1 bis 7, **dadurch gekennzeichnet,** daß die Luftdurchlässigkeit der mindestens einen Lage Feinfaser-Vlies 100-2.000 l/m².s bei 200 Pa Unterdruck (DIN 53887) beträgt.

9. Mehrlagiger Filterverbund nach einem der Ansprüche 1 bis 8, **dadurch gekennzeichnet,** daß der durchschnittliche Faserdurchmesser der mindestens einen Lage Feinfaser-Vlies von 0,5 µm bis 15 µm reicht.

10. Mehrlagiger Filterverbund nach einem der Ansprüche 1 bis 9, **dadurch gekennzeichnet,** daß die mindestens eine Lage Feinfaser-Vlies eine Lage Meltblown-Vlies ist.

11. Mehrlagiger Filterverbund nach einem der Ansprüche 1 bis 10, **dadurch gekennzeichnet,** daß zwei oder mehrere Lagen durch Haftvermittler miteinander verklebt sind.

12. Mehrlagiger Filterverbund nach einem der Ansprüche 1 bis 10, **dadurch gekennzeichnet,** daß zwei oder mehrere Lagen ohne Haftvermittler durch Thermokalandrierung oder Ultraschallschweißung miteinander verbunden sind.

13. Mehrlagiger Filterverbund nach einem der Ansprüche 1 bis 12, **dadurch gekennzeichnet,** daß die Stirnränder der mindestens einen Lage Feinfaser-Vles leckdicht gegen Luft mit der darunterliegenden Lage verbunden sind.

## Claims

1. Multi-layered filter composite for making vacuum cleaner filter bags comprising at least one layer of filter paper and at least one layer of fine-grained fleece, **characterised in that** the at least one layer of fine-grained fleece does not cover the full width of the layer of filter paper bonded to it and does not project beyond the edges of the filter paper layer, and thus one or two edge strip recesses are formed on the at least one layer of filter paper.

2. Multi-layered filter composite according to Claim 1, **characterised in that** it consists of one layer of filter paper and one layer of fine-grained fleece.

3. Multi-layered filter composite according to Claim 1 or 2, **characterised in that** the air permeability of the composite is 45 to 460 l/m².s at 200 Pa negative pressure (DIN 53887).

4. Multi-layered filter composite according to one of Claims 1 to 3, **characterised in that** the mass per unit area of the at least one layer of filter paper is 30 to 80 g/m² (ISO 536).

5. Multi-layered filter composite according to one of Claims 1 to 4, **characterised in that** the air permeability of the at least one layer of filter paper is 80 to 600 l/m².s at 200 Pa negative pressure (DIN 53887).

6. Multi-layered filter composite according to one of Claims 1 to 5, **characterised in that** the tensile strength of the at least one layer of filter paper is longitudinally 20 to 80 N/15 mm strip width and transversely 15 to 60 N/15 mm strip width (DIN 53112).

7. Multi-layered filter composite according to one of Claims 1 to 6, **characterised in that** the at least one layer of fine-grained fleece has a mass per unit area of 3 to 30 g/m² (ISO 536).

8. Multi-layered filter composite according to one of Claims 1 to 7, **characterised in that** the air permeability of the at least one layer of fine-grained fleece is 100-2,000 l/m².s at 200 Pa negative pressure (DIN 53887).

9. Multi-layered filter composite according to one of Claims 1 to 8, **characterised in that** the average fibre diameter of the at least one layer of fine-grained fleece ranges from 0.5 µm to 15 µm.

10. Multi-layered filter composite according to one of Claims 1 to 9, **characterised in that** the at least one layer of fine-grained fleece is a layer of meltblown fleece.

11. Multi-layered filter composite according to one of Claims 1 to 10, **characterised in that** two or more layers are glued to one another by adhesive means.

12. Multi-layered filter composite according to one of Claims 1 to 10, **characterised in that** two or more layers are bonded to one another without adhesive means by heatcalendering or ultrasound welding.

13. Multi-layered filter composite according to one of Claims 1 to 12, **characterised in that** the front edges of the at least one layer of fine-grained fleece are bonded to the layer beneath as impermeable to air leakage.

## Revendications

1. Composite de filtre à plusieurs couches pour la fabrication de sacs filtrants pour aspirateur à poussières, comprenant au moins une couche de papier filtre et au moins une couche de matelas de fibres fines, **caractérisé en ce que** la au moins une couche de matelas de fibres fines ne couvre pas la pleine largeur de la couche, lui étant liée, de papier filtre et ne ressort pas sur les bords de la couche de papier filtre et, ainsi, sont formés un ou deux évidements de bande de bordure sur la au moins une couche de papier filtre.

2. Composite de filtre à plusieurs couches selon la revendication 1, **caractérisé en ce qu**'il est constitué d'une couche de papier filtre et d'une couche de matelas de fibres fines.

3. Composite de filtre à plusieurs couches selon la revendication 1 ou 2, **caractérisé en ce que** la perméabilité à l'air du composite est de 45 à 460 l/m².s pour une dépression de 200 Pa (DIN 53887).

4. Composite de filtre à plusieurs couches selon l'une des revendications 1 à 3, **caractérisé en ce que** la masse surfacique de la au moins une couche de papier filtre est de 30 à 80 g/m² (ISO 536).

5. Composite de filtre à plusieurs couches selon l'une des revendications 1 à 4, **caractérisé en ce que** la perméabilité à l'air de la au moins une couche de papier filtre est de 80 à 600 l/m².s pour une dépression de 200 Pa (DIN 53887).

6. Composite de filtre à plusieurs couches selon l'une des revendications 1 à 5, **caractérisé en ce que** la résistance à la rupture de la au moins une couche de papier filtre est, en direction longitudinale, de 20 à 80 N/15 mm de largeur de bande et, en direction transversale, de 15 à 60 N/15 mm de largeur de bande (DIN 53 112).

7. Composite de filtre à plusieurs couches selon l'une des revendications 1 à 6, **caractérisé en ce que** la au moins une couche de matelas en fibres fines présente une masse surfacique de 3 à 30 g/m² (ISO 536).

8. Composite de filtre à plusieurs couches selon l'une des revendications 1 à 7, **caractérisé en ce que** la perméabilité à l'air de la au moins une couche de matelas en fibres fines est de 100 à 2000 l/m².s pour une dépression de 200 Pa (DIN 53887).

9. Composite de filtre à plusieurs couches selon l'une des revendications 1 à 8, **caractérisé en ce que** le diamètre de fibre moyen de la au moins une couche de matelas en fibres fines va de 0,5 *µ*m à 15 *µ* m.

10. Composite de filtre à plusieurs couches selon l'une des revendications 1 à 9, **caractérisé en ce que** la au moins une couche de matelas de fibres fines est une couche de matelas Meltblown.

11. Composite de filtre à plusieurs couches selon l'une des revendications 1 à 10, **caractérisé en ce que** deux couches ou plus sont collées ensemble par un agent adhésif.

12. Composite de filtre à plusieurs couches selon l'une des revendications 1 à 10, **caractérisé en ce que** deux couches ou plus sont reliées ensemble sans adhésif, par un calandrage thermique ou bien un soudage par ultra-sons.

13. Composite de filtre à plusieurs couches selon l'une desrevendications 1 à 12, **caractérisé en ce que** les bords frontaux de la au moins une couche du matelas à fibres fines sont reliés de façon étanche aux fuites d'air envers la couche sous jacente.
